# EUROPÄISCHE PATENTSCHRIFT

(11) **EP 2 504 411 B1**
(45) Veröffentlichungstag und Bekanntmachung des Hinweises auf die Patenterteilung: **26.12.2018**
(21) Anmeldenummer: 10790727.1
(22) Anmeldetag: 26.11.2010
(51) Int. Cl.: C10B 53/02, C10L 5/44, C10J 3/46, C10J 3/66

(54) **VORRICHTUNG UND VERFAHREN ZUR ERZEUGUNG EINES SYNTHESEGASES AUS AUFBEREITETER BIOMASSE DURCH FLUGSTROM-VERGASUNG**
DEVICE AND METHOD FOR GENERATING A SYNTHESIS GAS FROM PROCESSED BIOMASS BY ENTRAINED-FLOW GASIFICATION
DISPOSITIF ET PROCÉDÉ DE PRODUCTION D'UN GAZ DE SYNTHÈSE À PARTIR DE BIOMASSE PRÉPARÉE PAR GAZÉIFICATION EN LIT ENTRAÎNÉ

(30) Priorität: 27.11.2009 DE 102009055976
(43) Veröffentlichungstag der Anmeldung: 03.10.2012
(73) Patentinhaber: Linde Aktiengesellschaft, 80331 München (DE)
(72) Erfinder: RÜGER, Dietmar, 01728 Bannewitz (DE); SCHULZE, Olaf, 09633 Tuttendorf (DE); ALTHAPP, Anton, 09600 Oberschöna (DE); EICHHORN, Christian, 09599 Freiberg (DE); KRETSCHMER, Horst, 09600 Weißenborn (DE)
(86) Internationale Anmeldenummer: PCT/EP2010/007181
(87) Internationale Veröffentlichungsnummer: WO 2011/063971

(56) Entgegenhaltungen:
- WO-A1-2007/138534
- DE-B3-102007 012 112
- DE-U1-202007 016 454
- US-A1- 2007 079 554
- KOBAYASHI ET AL: "A new pulverized biomass utilization technology", POWDER TECHNOLOGY, ELSEVIER SEQUOIA, LAUSANNE, CH, Bd. 180, Nr. 3, 2. Januar 2008 (2008-01-02), Seiten 272-283, XP022406245, ISSN: 0032-5910, DOI: DOI:10.1016/J.POWTEC.2007.02.041

## Beschreibung

Die Erfindung betrifft eine Vorrichtung und ein Verfahren zur Erzeugung eines kohlenmonoxid- und wasserstoffreichen sowie teerfreien und methanarmen Synthese- beziehungsweise Brenn- oder Reduktionsgases aus Biomasse durch Flugstromvergasung mit einem hohen Umwandlungswirkungsgrad.

Die US 2007/079554 A1 offenbart eine Vorrichtung und entsprechendes Verfahren zur Erzeugung eines Synthesegases aus Biomasse durch Flugstromvergasung, umfassend eine Trocknungsvorrichtung zur Trocknung des Brennstoffs aufweist, der einer Zerkleinerungsvorrichtung nachgeschaltet ist,
wobei die Zerkleinerungsvorrichtung eine Zerkleinerung des Brennstoffs in einen Brennstaub mit Partikelgrößen in einem Bereich von < 200 µm bereitstellt. In der EP 0 745 114 B1 wird ein Verfahren zur Vergasung von Biomasse beschrieben, bekannt als Carbo-V®-Verfahren, dessen Ziel bei einem niedrigeren Verbrauch an sauerstoffhaltigen Vergasungsmitteln und einem höheren Vergasungswirkungsgrad die Erzeugung eines teerfreien Brenngases ist, während anorganische Anteile der Biomasse als verglastes, eluierfestes Produkt anfallen. Dazu wird die Biomasse durch die physikalische Enthalpie des Vergasungsgases getrocknet und durch Schwelung in Gas und Koks zerlegt, entsprechend einem in der DE 198 07 988 B4 offenbarten Niedertemperatur-Vergasungsprozesses (NTV-Prozesses). In dem Niedertemperatur-Vergasungsprozess werden flüchtige Bestandteile aus der Biomasse durch die thermische Zerlegung abgetrennt, wobei ein teerhaltiges NTV-Gas und ein teerfreier, mit relativ geringem Energieaufwand mahlbarer Koks vor der eigentlichen Vergasung entstehen.

Das entstandene teerhaltige NTV-Gas wird mit dem in der trockenen Gasreinigung anfallenden Restkoks in einem Hochtemperatur-FlugstromVergasungsprozess bei Temperaturen oberhalb des Ascheschmelzpunktes exotherm vergast. In das heiße Vergasungsgas aus dieser Stufe wird in einer zweiten Vergasungsstufe, der sogenannten endothermen Vergasung, der Koks aus dem NTV-Prozess zugegeben. Durch die wärmeverbrauchenden Vergasungsreaktionen des Kokskohlenstoffes mit dem Kohlendioxid und dem Wasserdampf des heißen Vergasungsgases der ersten Stufe zu Kohlenmonoxid und Wasserstoff, kühlt sich das Vergasungsgas auf ca. 800 bis 900 °C ab.

Durch die thermische Aufbereitungsstufe der NiedertemperaturVergasung ist es möglich, Biomasse in aufbereiteter Form als NTV-Gas direkt auf den Brenner der Hochtemperatur-Flugstromvergasung und als Koks über ein geeignetes Eintragsorgan (Dichtstromförderung, Schneckenförderer) der endothermen Vergasungsstufe zuzuführen.

Mit der Carbo-V®-Vergasung können Kaltgaswirkungsgrade erreicht werden, die etwa dem Wirkungsgrad einer Wirbelschichtvergasung entsprechen, da trotz der Hochtemperaturvergasungsstufe, in der die Brennstoffasche aufgeschmolzen wird, die Vergasungsendtemperatur im Bereich der Temperatur der Wirbelschichtvergasung liegt.

Das Vergasungsgas aus der Carbo-V®-Vergasung ist im Vergleich zum Gas aus der Wirbelschichtvergasung methanarm und teerfrei, da die Teere in der Hochtemperaturstufe thermisch zerstört worden sind und der Koks in der endothermen Stufe teerfrei ist.

Der Methangehalt und der Gehalt an höheren Kohlenwasserstoffen im Gas aus der Wirbelschichtvergasung resultieren zum einen aus dem thermodynamisch gebildeten Methan und zum anderen aus den flüchtigen Kohlenwasserstoffen des Entgasungsprozesses, der in der Wirbelschichtvergasung parallel zum Aufheiz-, Trocknungs- und Vergasungsprozess abläuft.

Methan und höhere Kohlenwasserstoffe sind keine Synthesegaskomponenten und müssen zunächst durch geeignete Verfahren, z. B. Reformierung oder partielle Oxidation, in Kohlenmonoxid und Wasserstoff umgewandelt werden, ansonsten verringern sie entscheidend die Ausbeute an Syntheseprodukten.

Der Carbo-V®-Prozess erfordert viele Feststoffschleusungen, wie die Einschleusung der Biomasse, die Ein- und Ausschleusung des im NTV-Prozess erzeugten Kokses, da dieser bei atmosphärischem Druck zerkleinert und von Fremdstoffen (Steine, Metallteile, etc.) befreit werden muss, die Aus- und Einschleusung des Restkokses, da dieser bei Atmosphärendruck zu Brennstaub für eine Dichtstromförderung aufgemahlen werden muss und die Schlackeausschleusung. Damit ist dieser Prozess verfahrenstechnisch aufwendig und störanfällig.

Ein weiterer Nachteil ist die direkte gasseitige Verbindung zwischen dem NTV-Reaktor und dem Brenner der Hochtemperatur-Vergasungsstufe, die in einem Druckniveau arbeiten. Der Betrieb des Verfahrens bei hohen Drücken von 30 bar und höher, wie sie für Synthesen förderlich sind, hat zwangsläufig einen erhöhten Aufwand für die vielen Feststoffschleusungen zur Folge. Die direkte Kopplung von NTV-Reaktor und Flugstromvergasung gestattet damit auch keine räumliche und zeitliche Trennung von thermischer Aufbereitung der Biomasse und Vergasung der Aufbereitungsprodukte, was sowohl für die Verfügbarkeit des Vergasungsprozesses als auch für eine zentrale Vergasung der dezentral anfallenden und aufbereiteten Biomasse von Vorteil sein kann.

Der pneumatische Transport von Kohlestaub in Flugstromvergasern ist Stand der Technik.

Die Umwandlung von kohlenstoffhaltigen Brennstoffen, wie etwa Kohle, Gas und Öl im Flugstrom zu Brenn-, Synthese- und Reduktionsgas ist aus dem Stand der Technik bekannt. In der Literatur werden dazu ausreichend Verfahren mit der Shell-Vergasung von Kohle und Erdölbegleitgas, der Kohle- und Altölvergasung mit dem GSP-Verfahren, das am Deutschen Brennstoffinstitut in Freiberg und im Gaskombinat Schwarze Pumpe entwickelt wurde, und der Kohlevergasung nach Texaco etc. beschrieben.

Bei der Vergasung von Kohle z. B. nach dem GSP-Verfahren wird die Kohle zu Brennstaub aufgemahlen und über pneumatische Dichtstromförderung in den Flugstromvergaser eingetragen.

Das in der Mahlung der Kohle erzeugte Kornspektrum wird dabei so eingestellt, dass auch die größten Partikel vollständig zu Vergasungsgas, respektive Synthesegas, umgesetzt werden, wobei die Reaktivität des Brennstoffes und die durch die Größe und die Durchsatzleistung des Vergasers bestimmte Verweilzeit der Partikel in der Reaktionszone zu beachten sind. Das hat zur Folge, dass ein maximaler Korndurchmesser nicht überschritten werden darf. Typische Kornspektren für die Flugstromvergasung von Kohle liegen zwischen 50 und 500 µm (siehe "Noell-Konversionsverfahren zur Verwertung und Entsorgung von Abfällen", Jürgen Carl, Peter Fritz, EF-Verlag für Energie- und Umwelttechnik GmbH, Berlin 1994).

Ein zu hoher Feinkornanteil dagegen führt dazu, dass bei den Flugstromvergasungsverfahren, die mit Wasserquenchung zur Gasabkühlung und Staubabscheidung arbeiten, die im Gas verbleibenden feinen Partikeln wie Aschepartikel aufgrund der schlechten Abscheidbarkeit nur ungenügend abgeschieden werden können, da diese feinen Partikel filtergängig sind.

Bei Verfahren, die mit Strahlungs- und Konvektionskühlung arbeiten, führt ein hoher Feinkornanteil zum verstärkten Verschmutzen der Kühlflächen und damit zu einer Verschlechterung der Gaskühlung.

Bei feinen mineralischen Stäuben mit Partikelgrößen unter 50 µm werden zur Verbesserung der Fließeigenschaften des Staubes und damit der Dosierbarkeit in der pneumatischen Förderung sogenannte Fließhilfsmittel eingesetzt (siehe z. B. http:// www.basf-cc.de/de/produkte/zementadditive).

Für den Eintrag von Brennstoff in eine Flugstromvergasung können auch Kohle-Wasser-Suspensionen, auch Maische oder Slurry genannt, eingesetzt werden. Diese Form des Brennstoffeintrages mit Wasser ist mehr oder weniger auf Steinkohle und Anthrazit beschränkt, da z. B. Braunkohle aufgrund des hohen Wasseraufnahmevermögens der Kapillare einen hohen Wasserbedarf bis zum Erreichen der Pumpbarkeit benötigt, so dass die energetischen Nachteile im Vergasungsprozess überwiegen.

Für Brennstoffe wie Kokse aus Biomasse oder Kohle ist auch die Herstellung einer pumpbaren Suspension mit brennbaren Flüssigkeiten, wie Teeröl, Altöl, Naphtha, Biodiesel etc, möglich, beispielsweise die Herstellung einer Suspension von Koks mit Teeröl.

Der Brennstoff für den Einsatz in der Flugstromvergasung muss entweder als Gas, pumpbare Flüssigkeit, Feststoff-Flüssigkeits-Suspension oder als pneumatisch förderbarer Brennstaub vorliegen.

Die mechanische Zerkleinerung von trockener Biomasse zu Brennstaub ist aufgrund der Faserstruktur der Biomasse sehr energieaufwändig und die Qualität des Staubes ist nicht ausreichend, um eine für den sicheren Betrieb und eine stabile Gasqualität erforderliche stetige pneumatische Förderung zu gewährleisten, siehe "Torrefaction for entrained-flow gasification of biomass", vorgestellt während "The 2nd World Conference and Technology Exhibition on Biomass for Energy, Industry and Climate Protection" in Rom, Italien, 10.-14. Mai 2004, von Patrick C.A. Bergman, Arjen R. Boersma, Jacob H.A. Kiel, Energy research Centre of the Netherlands (ECN).

Der so aus Biomasse erhaltene faserige Brennstaub neigt zur Agglomeration und Anreicherung von Körnung mit relativ großem Verhältnis von Länge zu Durchmesser. Die daraus folgende unstetige und störanfällige pneumatische Förderung kann zu kurzzeitigem Sauerstoffüberschuss im Vergaser und damit zur Bildung von explosiven Mischungen führen.

Der direkte Einsatz von fester Biomasse als Brennstoff in Flugstromvergasern ist deshalb nicht bekannt.

Einen anderen Weg der Aufbereitung der Biomasse für eine Flugstromvergasung zeigt das Bioliq-Verfahren, das in einem Vortrag mit dem Titel "Das FZK-Projekt, Herstellung von Synthesekraftstoff aus Biomasse", anlässlich der Internationalen Tagung Thermochemische Biomassevergasung, KUBUS, Leipzig 27.-28. Februar 2007, von E. Henrich, N. Dahmen, E. Dinjus, Forschungszentrum Karlsruhe, Institut für Technische Chemie, CPV, beschrieben wurde.

Bei diesem Verfahren wird Biomasse bei Umgebungsdruck in einem vom Lurgi-Ruhrgas-Verfahren her bekannten Mischreaktor in heißen Sand eingemischt und durch Schnellpyrolyse thermisch in Koks und Entgasungsgas zerlegt. Durch Abkühlung des Entgasungsgases erhält man Teeröl, das zusammen mit dem aus dem Sandbett abgetrennten Koks zu Slurry verarbeitet wird, der dann mittels Pumpen auf einen Flugstromvergaser gegeben wird. Die Trennung von Koks und Sand ist für beide Stoffe nie vollständig. Der abgetrennte Koks aus dem Sandbett ist stets mit Restsandbestandteilen verunreinigt, der relativ stark abrasiv ist, und der abgetrennte Sand ist stets mit Restkoks versetzt.

Das verbleibende nichtkondensierte Gas und der Rest-Kohlenstoff im Sand werden durch Verbrennung und damit Aufheizung des Sandes zur Deckung des Wärmebedarfs der Pyrolyse genutzt.

Durch die Erzeugung von Koks und Teeröl bzw. Slurry ist man bei diesem Verfahren in der Lage, den thermischen Aufbereitungsprozess zeitlich und räumlich vom eigentlichen Flugstromvergasungsprozess zu trennen. Das ermöglicht die Zusammenfassung vieler kleiner dezentraler Erzeuger von Teeröl und Koks bzw. Slurry in einer zentralen Vergasungsanlage. Durch die bei den Zwischenprodukten im Vergleich zur Biomasse höhere Energiedichte können Transportraum und damit Transportkosten bei der dezentral anfallenden Biomasse eingespart werden.

Das durch Vergasung von Slurry erzeugte Gas ist teer- und in der Regel auch nahezu methanfrei, da die Vergasungstemperatur oberhalb der Ascheschmelztemperatur liegt. Der bei diesem Verfahren in der Vergasung problemlos realisierbare höhere Druck hat bei den hohen Temperaturen nur eine geringe Auswirkung auf die thermodynamische Methanbildung.

Um eine stabile und sichere Vergasung zu gewährleisten, müssen beide Komponenten entweder getrennt oder als Mischung in einem konstanten Mischungsverhältnis dem Vergasungsprozess zugeführt werden. Insbesondere die Qualität des Teeröls und auch des Slurries kann aufgrund des Wasseranteils im Teeröl stark schwanken und zu einer Phasentrennung führen, da Teeröl und Slurry nicht lagerstabil sind, wodurch ein erhöhtes Sicherheitsrisiko durch möglichen Sauerstoffdurchbruch in der Vergasung auftritt.

Ein weiterer Nachteil beim Bioliq-Verfahren ist, dass mehr Gas und Rest-Kohlenstoff anfällt, als für den Wärmebedarf des Pyrolyseprozesses erforderlich ist. Damit ist der Kaltgaswirkungsgrad bezogen auf die eingesetzte Biomasse geringer als beim Carbo-V®-Verfahren und der Wirbelschichtvergasung. Ein weiterer Nachteil ist, dass bei der Abkühlung des Entgasungsgases neben kondensierbaren Kohlenwasserstoffen auch das Reaktions- und Trocknungswasser kondensiert. Damit enthält das Teeröl einen nicht unerheblichen Anteil Wasser, was den Heizwert des Teeröls negativ beeinflusst.

Die überschüssige, exergetisch hochwertige Wärme kann z. B. für die Biomassetrocknung oder für externe Energienutzung eingesetzt werden.

Ein weiteres Verfahren ist unter anderem in "Torrefaction for entrained-flow gasification of biomass" beschrieben, vorgestellt auf "The 2nd World Conference and Technology Exhibition on Biomass for Energy, Industry and Climate Protection" in Rom, Italien, 10.-14. Mai 2004, Patrick C.A. Bergman, Arjen R. Boersma, Jacob H.A. Kiel, Energy Research Centre of the Netherlands (ECN).

Bei diesem Verfahren wird die getrocknete Biomasse in einem Röstprozess (Torrefaction Process) bei Temperaturen von 200 bis 300 °C und atmosphärischem Druck thermisch behandelt. Dabei wird ein Teil der flüchtigen Komponenten, hauptsächlich Kohlendioxid und Kohlenmonoxid, abgespalten. Typischerweise hat das Torrefaction-Produkt noch 70 bis 90 % der Masse und 83 bis 97 % der Energie der wasserfreien Biomasse, bezogen auf den unteren Heizwert.

Bei diesem Behandlungsverfahren wird die Faserstruktur der Biomasse zum Teil zerstört, so dass der Energieaufwand für die Mahlung des Torrefaction-Produktes gegenüber der ursprünglichen Biomasse sinkt. In der Veröffentlichung wird eine Verbesserung der Staubqualität gegenüber thermisch unbehandeltem Biomassestaub hinsichtlich pneumatischer Förderbarkeit angegeben. Die Qualität von Kohlestaub wird aber nicht erreicht.

Aus der Kenntnis der Phasen der Pyrolyse (aus "Die Chemie des Holzes", N.I. Nikitin, Akademie-Verlag Berlin, 1955) ist zu schließen, dass dieser Prozess nur innerhalb eines geringen Temperaturfensters betreibbar ist. Liegt die Temperatur zu niedrig, sind lange Verweilzeiten und nur eine ungenügende Verbesserung der mechanischen Eigenschaften zu erwarten, wie in der Veröffentlichung zum Torrefaction-Prozess bestätigt wird. Bei Temperaturen über 300 °C werden verstärkt flüchtige Bestandteile in Form von höheren Kohlenwasserstoffen (Teeren) abgetrieben, und der Prozess entwickelt sich in Richtung Pyrolyse mit geringer werdendem energetischem Wirkungsgrad bezogen auf den erzeugten Pyrolysekoks. Ab 300 °C ist auch mit einer exothermen Phase zu rechnen, so dass der Prozess hinsichtlich der Einhaltung des Temperaturfensters schwer beherrschbar wird.

Bisher liegen nur Erfahrungen bezüglich Holz und Stroh vor. Weiterführende Erkenntnisse über das einsetzbare Biomassespektrum sind nicht bekannt.

In der Literatur ist mit "Zauberkohle aus dem Dampfkochtopf", MAXPLANCKFORSCHUNG, 2/2006, ein Verfahren wieder bekannt geworden, bei dem Biomasse, wie Holz, Stroh, Gras, pflanzliche Abfallstoffe und andere minderwertige Biomasse, bei einem Druck von ca. 20 bar, Temperaturen zwischen 180 und 230 °C in Gegenwart einer Säure als Katalysator und einer Verweilzeit von ca. 6 bis 12 Stunden durch hydrothermale Karbonisierung in eine kohleartige Substanz und Wasser umgewandelt wird.

Dieses Verfahren wurde bereits im Jahr 1913 von Friedrich Bergius beschrieben und bildet den über Jahrmillionen ablaufenden Prozess der Inkohlung in wenigen Stunden ab.

Während dieses hydrothermalen Karbonisierungsprozesses wird Sauerstoff hauptsächlich in Form von Wasser abgespalten. Es entstehen auch geringe Mengen Kohlendioxid und ein geringer Kohlenstoffanteil der Biomasse wird in Wasser gelöst. Der in Form von Wasser und Kohlendioxid in der Biomasse gebundene Sauerstoff ist für den Vergasungsprozess stofflicher "Ballast", da er auf die Vergasungstemperatur aufgeheizt werden muss und im erzeugten Gas als Wasserdampf und Kohlendioxid erscheint. Aufgrund des Wärmebedarfs für die Aufheizung des gebundenen Sauerstoffs wird ein zusätzlicher Anteil Kohlenmonoxid und Wasserstoff zu Kohlendioxid und Wasserdampf verbrannt. Dieser Verlustanteil ist umso höher, je höher die Vergasungstemperatur ist. Insbesondere bei einer Flugstromvergasung, bei der die Vergasungstemperatur oberhalb der Ascheschmelztemperatur liegt, würde dieser Einfluss zu einer wesentlichen Verschlechterung der Gasqualität beitragen.

Entsprechend "Zauberkohle aus dem Dampfkochtopf" liegt bei der hydrothermalen Karbonisierung der Kohlenstoffnutzungsgrad in der erzeugten Kohle, bezogen auf die eingesetzte Biomasse, bei nahezu 100 %, andere Veröffentlichungen weisen einen C-Nutzungsgrad von über 90 % bis 99 % aus.

Der energetische Wirkungsgrad, gebildet mit den Verbrennungswärmen der wasserfreien Kohle, bezogen auf die Verbrennungswärme der wasserfreien Biomasse, beträgt über 90 %.

Der hydrothermale Karbonisierungsprozess ist exotherm ("Zauberkohle aus dem Dampfkochtopf", MAXPLANCKFORSCHUNG, 2/2006).

Durch die Behandlung der Biomasse in der wässrigen Phase werden wasserlösliche Bestandteile, wie z. B. Alkalien und Halogene, aus der Asche herausgelöst.

Die hydrothermale Karbonisierung verändert die Struktur der Biomasse so, dass die erzeugte Karbonisierungskohle bzw. Kohle nach der Trocknung mit wesentlich geringerem Energieaufwand zu Brennstaub aufmahlbar ist als die ursprüngliche Biomasse.

In "Zauberkohle aus dem Dampfkochtopf' wird berichtet, dass die Biomasse nach der thermischen Behandlung als aus Nanopartikeln aufgebautes Konglomerat vorliegt, das durch geringe mechanische Belastung in kleinere Partikel zerfällt. Damit dürfte der Energiebedarf für die Zerkleinerung dieser behandelten Biomasse geringer sein als bei Torrefaction-Material, bei dem Energieeinsparungen gegenüber der unbehandelten Biomasse von 50 bis 85 % ermittelt wurden (s. o., "Torrefaction for entrained-flow gasification of biomass").

So beschreibt die DE 10 2007 062 811 A1 einen aus Biomasse durch hydrothermale Karbonisierung gewonnenen Brennstoff, der eine Partikelgröße von unter 50 µm, bevorzugt im Nanometerbereich, also deutlich unter dem für eine Flugstromvergasung geeigneten Bereich zwischen 50 und 500 µm, aufweist.

Das Verfahren der hydrothermalen Karbonisierung ist geeignet, aus Biomasse, wie Holz, Stroh, Gras, pflanzlichen Abfallstoffen und anderer minderwertiger Biomasse, durch Abspaltung von Sauerstoff, hauptsächlich in Form von gebundenem Wasser, einen heizwertreicheren Brennstoff, dessen Heizwert ähnlich dem von Braunkohle ist, zu erzeugen, der mit höherem Umwandlungswirkungsgrad als die ursprüngliche Biomasse zur Energieerzeugung eingesetzt werden kann.

Ausgehend von diesem Stand der Technik liegt der vorliegenden Erfindung die Aufgabe zu Grunde, die Synthesegasgewinnung aus Biomasse in Bezug auf hohen energetischen Wirkungsgrad, hohen Kohlenstoff-Nutzungsgrad, geringen apparativen Aufwand und hohe Flexibilität des Verfahrens zu verbessern, wobei insbesondere die Vergasung auch von minderwertiger Biomasse, wie Grünschnitt, Gras, landwirtschaftlichen Produkten und Abfallstoffen, wie z. B. Stroh, Rückständen aus der Verarbeitung von Biomasse, u. ä., in einem Hochtemperatur-Hochdruck-Flugstromvergasungsprozess zur Erzeugung eines teerfreien, methanarmen, kohlenmonoxid- und wasserstoffreichen Synthesegases ermöglicht werden soll.

Diese Aufgabe wird durch eine Vorrichtung mit den Merkmalen des unabhängigen Anspruchs 1 gelöst.

Ein entsprechendes Verfahren zur Erzeugung eines Synthesegases aus Biomasse durch Flugstromvergasung unter Verwendung der erfindungsgemäßen Vorrichtung wird mit den Merkmalen des Anspruchs 8 offenbart.

Bevorzugte Ausführungsformen werden durch die Unteransprüche beschrieben.

Eine erste Ausführungsform bezieht sich auf eine Vorrichtung, die zur Erzeugung eines Wasserstoff- und kohlenmonoxidreichen Vergasungsgases aus einer beliebigen Biomasse dient. Die Erzeugung des Vergasungsgases, beispielsweise eines Synthese-, Brenn- oder Reduktionsgases, erfolgt in einer Flugstrom-Vergasungsanlage, während die Aufbereitung der Biomasse zu einem förderbaren und zur Vergasung in der Vergasungsanlage geeigneten Brennstoff in einer der Flugstrom-Vergasungsanlage vorgeschalteten Aufbereitungsanlage erfolgt.

Für die Aufbereitung der Biomasse zu dem vergasungsfähigen Brennstoff wird die Biomasse in der Aufbereitungsanlage zunächst einer Grobzerkleinerungsvorrichtung zugeführt. Von der Grobzerkleinerungsvorrichtung wird die Biomasse durch eine erste Schleuse in eine druckbeaufschlagte Karbonisierungsanlage gefördert, in der die Biomasse hydrothermal karbonisiert wird. In der Grobzerkleinerungsvorrichtung wird daher die Biomasse entsprechend derart zerkleinert, dass eine reibungslose Förderung der Biomasse durch die Schleuse und eine vollständige Karbonisierung innerhalb einer vorgesehenen Verweilzeit stattfinden kann. Die druckbeaufschlagte Karbonisierungsanlage umfasst im Wesentlichen einen Karbonisierungsreaktor, in dem die hydrothermale Erzeugung von Karbonisierungskohle aus der Biomasse stattfindet.

Dem Karbonisierungsreaktor kann stromaufwärts vorteilhaft eine Vorwärmvorrichtung vorgeschaltet sein, die alternativ auch als Vorwärmzone in dem Karbonisierungsreaktor integriert sein kann. Die während des Karbonisierungsprozesses frei werdende Wärme kann auf diese Weise vorteilhaft zur Vorwärmung der zu behandelnden Biomasse und/oder Trocknung der erzeugten Kohle genutzt werden.

Ausgehend von der druckbeaufschlagten Karbonisierungsanlage folgt stromabwärts eine zweite Schleuse, durch die das aus der Biomasse entstandene wässrige Karbonisierungskohlegemisch aus der Karbonisierungsanlage zu einer oder mehreren Fest-Flüssig-Trennvorrichtungen zur Abtrennung des freien Wassers ausgeschleust wird, so dass nun ein Brennstoff in Form der Karbonisierungskohle bereitgestellt ist. Stromabwärts der Fest-Flüssig-Trennvorrichtung(en) ist ferner eine Trocknungsvorrichtung zur Trocknung des Brennstoffs bzw. der Karbonisierungskohle und eine sich daran anschließende Zerkleinerungsvorrichtung für die getrocknete Karbonisierungskohle vorgesehen. Die Zerkleinerungsvorrichtung wird so ausgewählt, dass sie den die Karbonisierungskohle in einen Brennstaub mit einer Korngrößenverteilung zerkleinert, die Partikelgrößen in einem Bereich größer 50 µm, beispielsweise von 55 µm bis 500 µm umfasst.

Die Faserstruktur der Biomasse wird durch die thermische Aufbereitung in der hydrothermalen Karbonisierungsanlage vorteilhaft so verändert, dass die aus der Biomasse entstandene Karbonisierungskohle eine Faserstruktur aufweist, die nach der Trocknung mit einem um 50 % bis 85 % geringeren Energieaufwand zu dem Brennstaub vermahlen werden kann. Die besseren Staubeigenschaften der gemahlenen Karbonisierungskohle gegenüber der Ausgangsbiomasse verbessern die Fließeigenschaften und erhöhen den Durchströmungswiderstand der karbonisierten Kohle und ermöglichen eine stabile stetige Dichtstromförderung, was die Sicherheit der Flugstromvergasung hinsichtlich eines Sauerstoffdurchbruchs aufgrund einer Unstetigkeit der Brennstaubförderung entscheidend erhöht.

Um die Eigenschaften der Kohle aus Biomasse, also "Biokohle" weiter zu optimieren, können Fließ- und/oder Mahlhilfsmittel über eine Zuführleitung in die Zerkleinerungsvorrichtung der Trockenkohle zugegeben werden, so dass die Feinheit und der Wassergehalt der Trockenkohle den Erfordernissen des Fördersowie Vergasungsprozesses angepasst werden können.

Durch die Verwendung der hydrothermalen Karbonisierung anstelle einer Niedertemperaturvergasung eines herkömmlichen Carbo-V-Prozesses zur Erzeugung des kohlenartigen Brennstoffs für die nachgeordnete Vergasungsstufe wird es vorteilhaft möglich, ein breites Spektrum an Biomasse einzusetzen. So ist es mit der Aufbereitungsanlage der erfindungsgemäßen Vorrichtung möglich, nicht nur hochwertige Biomasse wie Holz und Holzabfälle zu verwenden, sondern jede beliebige Biomasse, insbesondere auch minderwertige Biomasse wie beispielsweise Grünschnitt, Gras, landwirtschaftliche Produkte und Bioabfallstoffe, umfassend Stroh sowie Rückstände aus einer Biomasseverarbeitung. Der aus der minderwertigen Biomasse durch die thermische Aufbereitung in der hydrothermalen Karbonisierung entstandene Brennstoff, die Karbonisierungskohle, kann somit nun der Vergasung zugänglich gemacht werden, was bei der steigenden Nachfrage für Holz und damit auch den steigenden Preisen einen erheblichen wirtschaftlichen Vorteil darstellt.

Da Biomasse in der Regel dezentral anfällt, müsste für eine große Vergasungsanlage die Biomasse aus einem großen Einzugsgebiet an einen zentralen Standort der Vergasung gebracht werden. Durch die mit dem hydrothermalen Karbonisierungsprozess möglich werdende Entkopplung der Aufbereitung der Biomasse von der Vergasung wird eine dezentrale Aufarbeitung der Biomasse zu vergasungsfähigem Brennstoff an beliebig vielen Standorten mit entsprechend dimensionierten Aufbereitungsanlagen ermöglicht, so dass der aufbereitete Brennstoff wegen seiner gegenüber der Biomasse höheren Energiedichte mit geringerem Transportaufwand/-kosten zu der Vergasungsanlage transportiert werden kann, wodurch insgesamt eine verbesserte Nutzung der Gesamtvorrichtung erreicht werden kann, was einen erheblichen wirtschaftlichen Vorteil darstellt.

Um den in der Aufbereitungsanlage erzeugten Brennstoff der Flugstrom-Vergasungsanlage zuzuführen, umfasst die erfindungsgemäße Vorrichtung eine Überführungsvorrichtung. Wenn eine Aufbereitungsanlage in direkter Nachbarschaft zu einer Vergasungsanlage vorgesehen ist, wird die Überführungsvorrichtung im einfachsten Fall aus einem zwischen der Aufbereitungsanlage und der Vergasungsanlage angeordneten Fördermittel für den Brennstoff gebildet. Entsprechend der vorteilhaften Ausführungsform der Erfindung mit dezentralen Aufbereitungsanlagen und einer zentralen Vergasungsanlage wird die Überführungsvorrichtung, die die Kopplung der Aufbereitungsanlage(en) mit der Flugstrom-Vergasungsanlage bereitstellt, ein Transportmittel wie etwa ein Lastkraftwagen zur Überführung des Brennstoffs sein.

Ein weiterer Vorteil der erfindungsgemäß eingesetzten Karbonisierungsanlage liegt darin, dass die hydrothermale Karbonisierung in wässriger Phase abläuft, so dass eine vorherige energetisch aufwändige Trocknung der Biomasse überflüssig ist. Ferner kann das bei der Karbonisierung abgespaltene Wasser, das mit der überschüssigen Wärme des exothermen Prozesses aufgeheizt vorliegt, zur Vorwärmung der Biomasse verwendet werden. Dadurch, dass die Karbonisierung in wässriger Phase abläuft, kann das erforderliche Temperaturfenster einfacher und sicherer als etwa beim Torrefaction-Verfahren eingehalten werden, das in der Gasphase abläuft.

Neben der Aufbereitungsanlage, die aus Biomasse einen zur Flugstromvergasung geeigneten Brennstoff bereitstellt, umfasst die erfindungsgemäße Vorrichtung eine Flugstrom-Vergasungsanlage, die in einer Ausführungsform eine mit der Überführungsvorrichtung koppelbare Zuführung für den Brennstoff umfasst, der von der Aufbereitungsanlage überführt wurde. An die Brennstoffzuführung schließt sich stromabwärts eine Schleuse an, mittels der der Brennstoff in ein druckbeaufschlagtes Fördersystem gespeist wird. Das Fördersystem für den Brennstoff mündet in eine Hochtemperatur-Flugstromvergasungsvorrichtung, die unter erhöhtem Druck steht und von der sich eine Ausschleusleitung für Schlacke und eine Produktleitung für das Synthesegas erstrecken.

Eine solche Flugstromvergasungsvorrichtung kann einen oder mehrere Brenner aufweisen, wobei jedem Brenner eine Zuführungsleitung für ein Vergasungsmittel zugeordnet sein kann. Der oder die Brenner münden in einen Flugstromvergasungsreaktor, der eine Reaktionskammer und stromabwärts dazu eine Kühlkammer umfasst. Die Wandung der Reaktionskammer kann mit einer Feuerfestauskleidung ausgestattet sein und alternativ oder zusätzlich eine Kühlvorrichtung aufweisen, die beispielsweise an oder in der Wandung der Reaktionskammer angeordnet sein kann. Des Weiteren erstreckt sich von der Kühlkammer eine Ausleitungsvorrichtung für das Synthesegas, die mit der Produktleitung verbunden ist.

Die Kühlkammer kann in einer Ausführungsform eine Quenchkammer sein, die über eine Mehrzahl von Zuführungen für Quenchwasser und/oder Quenchgas verfügt. Alternativ kann die Kühlkammer auch zur indirekten Gaskühlung mit einem Strahlungskühler ausgestattet sein, an den sich auch gegebenenfalls ein Konvektionskühler anschließen kann. In einer Kombination aus Quenchen und indirekter Gaskühlung kann die Kühlkammer als Quenchkammer ausgeführt sein und zusätzlich eine Vorrichtung zur indirekten Gaskühlung umfassen, die sich an die Quenchkammer anschließt. Dabei kann vorzugsweise ein Konvektionskühler der Quenchkammer nachgeschaltet sein.

Ein Schlackesumpf des Flugstromvergasungsreaktors befindet sich stromabwärts der Reaktionskammer, so dass die flüssige Schlacke aus der Reaktionskammer der Schwerkraft folgend nach unten in den Schlackesumpf gelangt, und von dort als erstarrtes Schlackegranulat über eine vierte Schleuse über die Ausschleusleitung abgeführt werden kann.

So kann vorteilhaft mit der erfindungsgemäßen Vorrichtung der durch hydrothermale Karbonisierung von (minderwertiger) Biomasse gewonnene Brennstoff in ein teerfreies, methanarmes Brenn-, Vergasungs- oder Synthesegas im Flugstromvergasungsreaktor erzeugt werden. Im Flugstromvergasungsreaktor lassen sich die insbesondere für Syntheseprozesse üblichen hohen Prozessdrücke von 30 bar und höher bei einem vergleichbaren oder auch höheren Vergasungswirkungsgrad und Brennstoffausnutzungsgrad als nach dem Stand der Technik realisieren, während gleichzeitig höhere spezifische Durchsatzleistungen erreicht werden können, was zu geringeren Produktionskosten bei der Herstellung von Synthesegas gegenüber dem Stand der Technik führt.

Der vorteilhaft aufgrund eines einheitlichen Brennstoffs einstufig gestaltete Flugstromvergasungsprozess ist gegenüber einem mehrstufigen Vergasungsprozess technisch einfacher und kommt daher mit lediglich einer Brennstaubschleusung und einer Schlackeschleusung aus, wohingegen bei der mehrstufigen Carbo-V®-Vergasung mit Niedertemperaturvergasung der Biomasse mindestens sechs Schleusungen notwendig sind. Damit kann die Vergasungsanlage der Vorrichtung mit einem geringeren apparativen Aufwand konstruiert werden als eine herkömmliche Carbo-V®-Vergasungsanlage, und dadurch können Investitions- und Betriebskosten eingespart werden, während gleichzeitig die Verfügbarkeit der Flugstromvergasungsanlage steigt. Durch den Wegfall der Mehrzahl an Schleusvorgänge und durch die entfallende Zwangskopplung zwischen Aufbereitung und Vergasung können zudem in der Vergasung höhere Prozessdrücke einfacher realisiert werden. Damit kann eine Nachverdichtung des in der Vergasung erzeugten Gases auf den höheren Druck in einer Syntheseanlage entfallen, falls ein Einsatz des Vergasungsgases als Synthesegas vorgesehen ist.

In einer vorteilhaften Ausführungsform der erfindungsgemäßen Vorrichtung ist als Fördersystem ein pneumatisches Dichtstromfördersystem vorgesehen, wenn der Brennstoff der durch Trocknung und Mahlung gewonnene Brennstaub ist. Der Brennstaub wird durch Schleusung in das unter Druck stehende Dichtstromfördersystem eingetragen und durch die Zufuhr von Fördergas durch eine oder mehrere Fördergasleitungen in die Flugstromvergasung überführt.

Alternativ zu einem pneumatischen Dichtstromfördersystem für Brennstaub kann das Fördersystem auch ein Pumpenfördersystem sein, wobei der Brennstoff in Form einer hydraulisch förderbaren Brennstoffmaische vorliegt. Die Brennstoffmaische umfasst den Brennstoff und eine brennbare Flüssigkeit, wobei der Brennstoff der Brennstaub oder sogar auch die aus der Karbonisierung nach der Entwässerung erhaltene Karbonisierungskohle sein kann. Zur Bereitstellung der Brennstoffmaische umfasst entweder die Flugstrom-Vergasungsanlage stromaufwärts des Pumpenfördersystems oder die Aufbereitungsanlage stromabwärts der Fest-Flüssigtrennvorrichtung eine Maischvorrichtung, in die eine Zuführvorrichtung für die brennbare Flüssigkeit mündet.

Des Weiteren betrifft die Erfindung ein Verfahren zur Erzeugung eines Synthesegases aus Biomasse durch Flugstromvergasung, wobei der Brennstoff für die Flugstromvergasung aus einer hydrothermalen Karbonisierung der Biomasse stammt. Zur Durchführung des Verfahrens kann eine der Ausführungsformen der erfindungsgemäßen Vorrichtung verwendet werden. In einem ersten Teilverfahren wird der zur Vergasung in der Flugstrom-Vergasungsanlage geeignete Brennstoff aus der Biomasse in einer Aufbereitungsanlage erzeugt. Dazu wird die Biomasse in der Grobzerkleinerungsvorrichtung grob zerkleinert und daraufhin durch die erste Schleuse in die druckbeaufschlagte Karbonisierungsanlage zugeführt. Dort kann vorteilhaft ein Vorwärmen der grob zerkleinerten Biomasse in der Vorwärmvorrichtung beziehungsweise der in den Karbonisierungsreaktor integrierten Vorwärmzone erfolgen, worauf sich das hydrothermale Karbonisieren der vorgewärmten Biomasse in dem Karbonisierungsreaktor zu einem Gemisch aus Karbonisierungskohle und Wasser anschließt. Im nächsten Schritt wird das Karbonisierungskohle- und Wassergemisch durch die zweite Schleuse in die Fest-Flüssig-Trennvorrichtung(en) überführt, wo das Wasser von der Karbonisierungskohle abgetrennt wird, so dass entwässerte Karbonisierungskohle als Brennstoff bereitgestellt wird.

Die entwässerte Karbonisierungskohle wird in eine Trocknungsvorrichtung überführt und dort zu Trockenkohle getrocknet. Diese Trockenkohle wird dann in eine Zerkleinerungsvorrichtung überführt, in der die Trockenkohle in einen Brennstaub mit Partikelgrößen in einem Bereich größer 50 µm, etwa von 55 µm bis 500 µm zerkleinert wird. Dieser Brennstaub ist zur pneumatischen Förderung und zur Vergasung geeignet, er kann aber auch zur Herstellung einer hydraulisch förderbaren Brennstoffmaische verwendet werden, wobei er in einer Maischvorrichtung mit einer brennbaren Flüssigkeit zu einer pumpbaren und im Flugstrom vergasbaren Maische verarbeitet wird.

Gegebenenfalls kann schon die entwässerte Karbonisierungskohle als Brennstoff in der Flugstromvergasungsanlage verwendet werden und zwar in Form einer Brennstoffmaische, wenn die Karbonisierungskohle in einer Maischvorrichtung mit einer brennbaren Flüssigkeit zu Maische verarbeitet wurde.

Die Schritte des hydrothermalen Karbonisierens, des Trocknens und des Zerkleinerns können zeitlich und räumlich unabhängig voneinander durchgeführt werden, abhängig von der vorhandenen Biomasse und der Art und Menge des gewünschten Brennstoffs. Insbesondere zur Verbesserung der Mahlung, aber auch um die Qualität des entstehenden Brennstaubs hinsichtlich seiner Fließeigenschaften zu verbessern, kann während des Mahlschritts ein Mahl- und/oder Fließ-Hilfsmittel in die Zerkleinerungsvorrichtung zugeführt werden.

Der in der Aufbereitung erzeugte Brennstoff wird mittels der Überführungsvorrichtung zu einer Flugstrom-Vergasungsanlage überführt, wo das Synthesegas erzeugt wird, indem der Brennstoff im Hochtemperatur-Vergasungsreaktor vergast wird. Die Flugstromvergasung des aus der Biomasse erhaltenen Brennstoffs läuft dabei bei Temperaturen von 1.200°C bis 1.600°C exotherm unter Sauerstoffbeteiligung bei einem Druck von wenigstens 3 bar, vorzugsweise über 40 bar, ab.

Der Wirkungsgrad der hydrothermalen Karbonisierung ist hauptsächlich aufgrund der besseren Kohlenstoffbilanz deutlich höher als der Wirkungsgrad der Niedertemperaturvergasungs-Schnellpyrolyse. So ist bei vergleichbaren Vergasungswirkungsgraden der Wirkungsgrad des Gesamtprozesses der Vergasung der Biomasse (inklusive thermischer Aufbereitung) beim erfindungsgemäßen Verfahren mit der hydrothermaler Karbonisierung deutlich höher als der Wirkungsgrad etwa beim Bioliq-Verfahren, was sich in einer höheren Synthesegasausbeute bemerkbar macht.

Vorteilhaft ist ferner, dass der Kaltgaswirkungsgrad des Gesamtverfahrens einschließlich der hydrothermalen Karbonisierung und der Flugstromvergasung trotz der Hochtemperaturvergasung aufgrund der Sauerstoffabspaltung im hydrothermalen Karbonisierungsprozess vergleichbar mit dem Kaltgaswirkungsgrad des Carbo-V®-Verfahrens ist.

Indem die wasserlöslichen Alkalien und Halogene in der thermischen Aufbereitungsstufe der hydrothermalen Karbonisierung aus der Biomassensubstanz herauslöst werden, die dann in der Fest-Flüssigtrennung mit dem Wasser abgetrennt und entsorgt werden können, wird der Asche- und Schadstoffgehalt des Brennstoffs verringert. Damit wird der Vergasungsprozess mit einer geringeren Aschemenge und Schadstofffracht belastet, was energetische Vorteile und geringeren Aufwand bei der Gasreinigung bewirkt. Gleichzeitig können mit dem Abwasser herausgelöste Nährstoffe wieder dem Nährstoffkreislauf zugeführt werden.

Diese und weitere Vorteile werden durch die nachfolgende Beschreibung unter Bezug auf die beigefügte Figur dargelegt.

Der Bezug auf die Figur in der Beschreibung dient der Unterstützung der Beschreibung und dem erleichterten Verständnis des Gegenstands. Die Figur ist lediglich eine schematische Darstellung eines Ausführungsbeispiels der Erfindung.

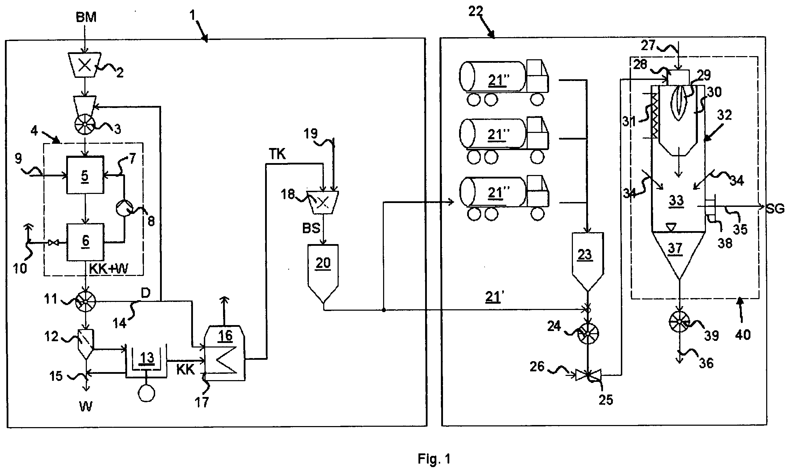

**Fig. 1** zeigt ein Verfahrensfließbild einer Ausführungsform der erfindungsgemäßen Vorrichtung umfassend eine Aufbereitungsanlage, eine Überführungsvorrichtung und eine Flugstrom-Vergasungsanlage mit Quenchung mittels Wasser.

Die erfindungsgemäße Vorrichtung kombiniert die Vorrichtungen zur Durchführung der Verfahrensschritte der hydrothermalen Karbonisierung von Biomasse zu Karbonisierungskohle (Kohle), und einer Hochtemperatur-Flugstrom-Vergasung der aus der Biomasse erzeugten Kohle. Diese kann entweder zu einer Kohlenmaische verarbeitet werden, in der die Karbonisierungskohle in einer brennbaren Flüssigkeit suspendiert wird, oder die erzeugte Kohle kann in einer bevorzugten Ausführungsform einem Trocknungsschritt, gefolgt von einer Mahlung der Kohle, unterzogen werden, so dass ein pneumatisch förderbarer Brennstaub bereitgestellt wird, der über eine Dichtstromförderung der Hochtemperatur-Flugstrom-Vergasung zugeführt werden kann.

Die einzelnen Verfahrensschritte hydrothermale Karbonisierung der Biomasse, Trocknung der karbonisierten Kohle, Mahlung der Trockenkohle und Vergasung des Brennstaubes können an getrennten Standorten realisiert werden, insbesondere die hydrothermale Karbonisierung der Biomasse kann dezentral in kleineren Einheiten in der Nähe der anfallenden Biomasse vorgenommen werden, so dass Transportkosten verringert werden können.

Die Fließ- und Vergasungseigenschaften der Trockenkohle können optional durch Zugabe von Fließ- und Mahlhilfsmittel vor oder während der Mahlung der Trockenkohle verbessert werden. Dadurch können bei Bedarf die Fließeigenschaften verbessert und eine gute Dosierbarkeit des erzeugten Staubes in der pneumatischen Förderung gesichert werden.

Wie oben erwähnt, kann als Alternative zur pneumatischen Dichtstromförderung die karbonisierte, mechanisch entwässerte Biomasse angemaischt mit brennbaren Flüssigkeiten wie z. B. mit Teeröl, Altöl, Destillatrückständen, Naphtha, Biodiesel sowie weiteren brennbaren Flüssigkeiten mit Pumpen der Hochtemperatur-Hochdruck-Flugstromvergasung zugeführt werden.

Erfindungsgemäß kann neben Holz oder Holzabfällen auch minderwertige Biomasse wie Grünschnitt, Gras, landwirtschaftliche Produkte und Abfallstoffe, wie z. B. Stroh, Rückstände aus der Verarbeitung von Biomasse, u. ä verarbeitet und mit hohem Umwandlungswirkungsgrad zu kohlenmonoxid- und wasserstoffreichem, teerfreien und methanarmen Synthese-, oder auch Brenn- oder Reduktionsgas vergast werden.

Das erfindungsgemäße Verfahren bezieht sich darauf, dass von der zu vergasenden Biomasse zunächst bei der hydrothermalen Karbonisierung ein Teil des Sauerstoffs hauptsächlich in Form von gebundenem Wasser und in geringen Mengen in Form von Kohlendioxid abgespalten wird.

Durch die Sauerstoffabspaltung erhöht sich der Heizwert der erzeugten Karbonisierungskohle (Kohle), bezogen auf die Trockensubstanz, gegenüber dem Heizwert der eingesetzt Biomasse, was zu einer wesentlichen Verbesserung der Gasqualität im späteren Vergasungsprozess beiträgt.

Durch die Behandlung in wässriger Phase werden bereits wasserlösliche Alkalien und Halogene aus dem Brennstoff, der diese Mineralien enthält, herausgelöst und gelangen somit nicht in den Vergasungsprozess, wo sie eluierfest in die Schlacke eingebunden werden. Damit sind sie dem Nährstoffkreislauf wieder zuführbar.

Nach dem Karbonisierungsprozess kann die Kohle auf für Brennstaub übliche Wassergehalte getrocknet und anschließend zu pneumatisch förderbarem Brennstaub gemahlen werden.

Durch den Karbonisierungsprozess wird die Faserstruktur der Biomasse weitestgehend aufgebrochen, so dass die getrocknete Karbonisierungskohle mit geringerem Energieaufwand als die ursprüngliche Biomasse mahlbar ist, wobei der erzeugte Brennstaub eine bessere Kornform aufweist, die zu einer Verbesserung der pneumatischen Förderbarkeit des Staubes und damit zu einem sicheren und qualitätsgerechteren Vergasungsbetrieb beiträgt.

Das Kornspektrum in der Mahlung wird vorteilhaft so eingestellt, dass die Korngröße des erzeugten Staubes hauptsächlich im Bereich zwischen 55 und 500 µm liegt. Damit ist einerseits ein vollständiger Brennstoffumsatz im Vergaser gesichert, und andererseits kann auch hinsichtlich der unteren Korngrenze eine gute Staubabscheidung bei der Quenchung mittels Wasser bzw. in der nassen Gasreinigung erreicht werden. Weiterhin kann durch die Vermeidung eines zu hohen Feinkornanteils eine zu starke Verschmutzung von Wärmeübertragungsflächen in der Gaskühlung verhindert werden.

Der Brennstaub wird über ein pneumatisches Dichtstromfördersystem, das für hohe Betriebsdrücke geeignet ist, dem Flugstromvergaser zugeführt und dort zusammen mit einem sauerstoffhaltigen Vergasungsmittel zu methanarmen und kohlenmonoxid- und wasserstoffreichen Synthesegas umgesetzt.

Nachfolgend wird beispielhaft ein erfindungsgemäßes Verfahren anhand der in **Fig. 1** dargestellten erfindungsgemäßen Vorrichtung detailliert dargestellt.

Ein bevorzugtes Verfahren besteht grundsätzlich aus den Teilverfahren der hydrothermalen Karbonisierung der Biomasse BM zu Karbonisierungskohle KK unter Abspaltung von Sauerstoff hauptsächlich in Form von Wasser W, der Trocknung und Mahlung der erzeugten Kohle zu Brennstaub BS in der Aufbereitungsanlage 1, dem Transport des Brennstaubs BS von der Aufbereitungsanlage 1 zu einer Hochtemperatur-Flugstrom-Vergasungsanlage 22, der pneumatischen Dichtstromförderung des Brennstaubs BS in einen Flugstromvergaser 40 und der Vergasung des Brennstaubs BS mit einem Sauerstoff enthaltenden Vergasungsmittel im Flugstrom.

Die Biomasse BM wird an einem vom Standort der Flugstrom-Vergasungsanlage 22 entfernten Standort der Aufbereitungsanlage 1 zu dem förderbaren Brennstoff, der im vorliegenden Beispiel ein Brennstaub BS ist, aufbereitet. Dazu wird die Biomasse BM in einem geeigneten Zerkleinerer 2 soweit zerkleinert, dass es zu keinen mechanischen Problemen im nachfolgenden Verfahren, beispielsweise bei der Förderung der Biomasse BM durch die Schleuse 3, kommt und dass die zerkleinerte Biomasse BM in der zur hydrothermalen Karbonisierung vorgesehenen Verweilzeit in der Karbonisierungsanlage 4 durchkarbonisiert wird. Somit sind außer der Grobzerkleinerung der Biomasse BM in dem Zerkleinerer 2 keine weiteren Vorbereitungsschritte vor der Karbonisierung nötig, eine vorherige Trocknung der Biomasse BM ist nicht erforderlich, da der Karbonisierungsprozess in wässriger Phase abläuft.

Ferner ist es ebenfalls nicht erforderlich, die Biomasse hinsichtlich biomassespezifischer Eigenschaften wie Körnung, Qualität, Struktur und anderer Eigenschaften zu sortieren, so dass jede Art Biomasse mit dem erfindungsgemäßen Verfahren in einfacher Weise aufbereitet werden kann.

Die grob zerkleinerte Biomasse wird über die Schleuse 3 in die Karbonisierungsanlage 4 eingetragen, die mit einem Druck von ca. 20 bar beaufschlagt ist. Vor dem Eintrag in die Karbonisierungsanlage 4 kann die zerkleinerte Biomasse optional, wie in Fig. 1 dargestellt, mit Entspannungsdampf D vorgewärmt werden, der aus einer nachfolgenden Verfahrensstufe stammt und über eine Wasserdampfleitung 14 zugeführt werden kann. Gegebenenfalls kann die Biomasse an dieser Stelle auch mit einem Katalysator versetzt werden (nicht dargestellt in **Fig. 1****)** und so vorteilhaft mit Prozesswärme vorgewärmt über die Schleuse 3 zur hydrothermalen Karbonisierung zunächst in die Vorwärmvorrichtung 5 der Karbonisierungsanlage 4 geführt werden. Hier wird die Biomasse mit heißem Wasser vorgewärmt, unter Umständen kann zur Deckung des Wärmebedarfs oder auch für den Anfahrvorgang zusätzlich Druckdampf über eine in die Vorwärmvorrichtung 5 mündende Druckdampfzuleitung 9 zugeführt werden. Das in der Vorwärmvorrichtung 5 verwendete heiße Wasser stammt vorteilhaft aus dem Karbonisierungsprozess in dem Karbonisierungsreaktor 6, in dem die exotherme Reaktion der Biomasse zu Karbonisierungskohle KK stattfindet, wobei Prozesswasser W abgespalten wird, das dann mittels der Pumpe 8 über eine Heißwasserleitung 7 in die Vorwärmvorrichtung 5 zurückgeführt wird.

Nach der Vorwärmung in der Vorwärmvorrichtung 5 gelangt somit das Gemisch aus Biomasse und Wasser in die Karbonisierungszone 6, in der bei Temperaturen von 180 bis 230 °C und einer Verweilzeit von ca. 6 bis ca. 24 Stunden Sauerstoff hauptsächlich in Form von gebundenem Wasser, aber auch in geringen Mengen in Form von Kohlendioxid abgespalten wird. Dabei wird die Faserstruktur der Biomasse aufgebrochen, so dass die erzeugte Karbonisierungskohle KK bereits hier in der Karbonisierungsstufe in kleinere Korngrößen als die der Biomasse im Eintrittszustand zerfällt.

Da der Karbonisierungsprozess exotherm ist, kann die während der Karbonisierung entstehende Wärme, wie oben ausgeführt, in Form von heißem Wasser W in die Vorwärmzone 5 abgeführt werden.

Das auch als Sauerstoffabspaltungsprodukt entstehende Gas, hauptsächlich Kohlendioxid, wird zusammen mit dem im Gas enthaltenen Wasserdampf druckgeregelt mittels eines Ventils über den Auslass 10 an die Atmosphäre abgegeben. Eventuell noch überschüssige Wärme aus der exothermen Zone der Karbonisierung kann an dieser Stelle in Form von erhöhter Dampfmenge sicher abgeführt werden. Auch ist eine Nutzung der im Gas enthaltenen Enthalpie möglich.

Die gebildete Karbonisierungskohle KK wird zusammen mit dem Überschusswasser W über die Schleuse 11 aus der druckbeaufschlagten hydrothermalen Karbonisierungsanlage 4 ausgeschleust und entspannt. Aufgrund der hohen Temperatur der Kohle KK und des Wassers W wird ein Teil des Wassers verdampft. Dieser Dampf D kann, wie oben erwähnt, zur Vorwärmung der zerkleinerten Biomasse BM in der Vorlage zur Schleuse 3 oder beispielsweise auch stromabwärts über die Dampfleitung 14 in eine Wärmetauschvorrichtung 17 der Trocknungsvorrichtung 16 geführt werden und dort zur Trocknung der entwässerten Karbonisierungskohle KK eingesetzt werden.

Zunächst jedoch wird die aus der Biomasse BM entstandene Karbonisierungskohle KK in einer Trennvorrichtung 12 und einer mechanischen Entwässerungseinrichtung 13, wie beispielsweise einer Zentrifuge, einer Kammerfilter-, Siebband- oder Schneckenpresse, vom freien Wasser W getrennt, das sowohl aus der Trennvorrichtung 12 als auch der mechanischen Entwässerungseinrichtung 13 über eine Abwasserleitung 15 abgeführt wird. Das Abwasser W kann dabei gelöste Kohlenstoffverbindungen und gelöste Aschebestandteile wie Alkalien und Halogene enthalten. Sind Schadstoffverbindungen vorhanden, müssen diese aus dem Abwasser entfernt werden, bevor es in ein Klärwerk abgegeben wird.

Nach der mechanischen Entwässerung wird die Karbonisierungskohle KK in einer thermischen Trocknungsvorrichtung 16 mit Druckdampf D oder einem anderen Wärmeträger, der den Wärmetauscher 17 durchströmt, auf übliche Restwassergehalte von unter 10 % getrocknet.

Die so erhaltene Trockenkohle TK wird daraufhin in einer folgenden Zerkleinerungsvorrichtung 18 zu einem pneumatisch förderbaren Brennstaub BS zerkleinert, der eine Körnung hauptsächlich im Bereich von über 55 und unter 500 µm aufweist. Übliche Zerkleinerungsvorrichtungen 18 können beispielsweise Kugelmühlen, Walzenschüsselmühlen etc. sein.

Da im Karbonisierungsprozess die Faserstruktur der Biomasse weitestgehend aufgebrochen wurde, ist der Energieaufwand für die Mahlung der Trockenkohle TK mit dem Aufwand für fossile Kohle vergleichbar. Um den Zeitaufwand für den Mahlvorgang zu reduzieren, und die Fließeigenschaften des Brennstaubes BS zu verbessern, kann der Mühle 18 ein Mahl- und/oder Fließ-Hilfsmittel über eine geeignete Zuführung 19 zudosiert werden.

Der erzeugte Staub BS kann zunächst in einem für Brennstaub zugelassenem Silo 20 gepuffert bzw. zwischengelagert werden und anschließend zum Standort der Flugstrom-Vergasungsanlage 22 überführt werden. In **Fig. 1** ist die Überführung durch eine Förderleitung 21' oder durch Transportfahrzeuge 21" dargestellt.

Erfindungsgemäß kann eine Vorrichtung mehrere solche Aufbereitungsanlagen 1 an verschiedenen Standorten aufweisen, in denen die dezentral anfallende Biomasse BM ortsnah aufbereitet und mittels der Transportfahrzeuge 21" zum Standort der Flugstrom-Vergasungsanlage 22 verbracht wird.

Am Standort der Vergasungsanlage 22, der vorteilhaft zentral zu den Aufbereitungsstandorten gelegen ist, wird der Brennstaub aus dem Transportfahrzeug 21" zusammen mit Brennstaub, der von anderen Standorten mittels Transportfahrzeugen 21" zum Vergasungsstandort transportiert wurde, in ein Brennstaubsilo 23 gefördert und dort zwischengepuffert. Befinden sich die Aufbereitungsanlage 1 und die Flugstrom-Vergasungsanlage 22 am selben Standort, so ist deren alternative Kopplung über eine Förderleitung 21' vorteilhaft.

Für die Vergasung wird der Brennstaub über eine Schleuse 24 in das Dichtstromfördersystem 25 überführt, wo er mit Hilfe eines über eine Fördergasleitung 26 zugeführten Fördergases zu dem Brenner 28 der Hochtemperatur-Flugstromvergasungsvorrichtung 40 transportiert wird, deren Betriebsdruck mindestens 3 bar beträgt und vorzugsweise über 40 bar betragen kann.

Über eine getrennte Zuführung 27 des Brenners 28 wird dem Vergasungsreaktor 32 ein sauerstoffhaltiges Vergasungsmittel zugeführt, das reiner Sauerstoff sein kann oder das aus einem Sauerstoff-WasserdampfGemisch, einem Sauerstoff-Kohlendioxid-Gemisch oder einem Gemisch aus Sauerstoff, Wasserdampf und Kohlendioxid bestehen kann. In der im vorliegenden Beispiel mit einer Kühlvorrichtung 31 gekühlten Reaktionskammer 30, die mit einem feuerfesten Material ausgekleidet sein kann, reagieren am Austritt des Brennermunds 29 der Brennstaub und das Vergasungsmittel in einer Flammenreaktion bei Temperaturen oberhalb der Ascheschmelztemperatur, die üblicherweise bei 1.200 °C bis 1.600 °C, bevorzugt bei 1400 °C bis 1500 °C liegt, und bei Drücken oberhalb von 3 bar, vorzugsweise über 40 bar zu einem teerfreien und methanarmen, kohlenmonoxid- und wasserstoffreichen Vergasungsgas SG, das aus der Reaktionskammer 30 in die darunter angeordnete Quenchkammer 33 abströmt.

Zusätzlich kann sich an die Quenchkammer 33 ein nicht in **Fig.1** dargestellter Konvektionskühler anschließen, so dass auch eine Kombination von Teilquenchung mit indirekter Gaskühlung möglich ist, oder die Kühlkammer kann als Alternative zur Quenchung einen Strahlungskühler umfassen, an den sich potentiell ebenfalls ein Konvektionskühler anschließen kann. Die Anordnung der Kühlkammer, sei es nun die Quenchkammer 33 oder eine Kammer zur indirekten Gaskühlung, für die sich in der Kühlkammer Strahlungs- und/oder Konvektionswärmeübertragungsflächen befinden, hängt von der möglichen Abströmung des Gases aus der Reaktionskammer 30 ab. Möglich sind eine Abströmung nach oben, nach unten und eine Abströmung nach unten verbunden mit einer bis zu 180° Umlenkung des Gases. So kann die Kühlkammer über, unter oder neben der Reaktionskammer angeordnet sein, vorliegend ist in **Fig. 1** die Anordnung der Kühl- bzw. Quenchkammer 33 unter der Reaktionskammer 30 dargestellt.

Die in der Flammenreaktion aufgeschmolzene Asche des Brennstaubs wird durch den Drall des Brenners 28 an die Wand der Reaktionskammer 30 geschleudert und läuft dort als flüssige Schlacke auf einer Schicht fester Schlacke, die sich im vorliegenden Beispiel auf Grund der Kühlung 31 auf dem Feuerfestmaterial der Reaktionskammer 30 gebildet hat, ab und tropft am Austritt der Reaktionskammer 30 durch die Quenchkammer 33 in das Schlackebad 37, wo sie zu einem glasartigen Granulat erstarrt. Über die Schleuse 39 wird die feste Schlacke mittels einer Ausschleusleitung 36 aus dem Prozess abgeführt.

Unabhängig von der Gasabströmung wird die flüssige Schlacke aus der Reaktionskammer 30 stets nach unten in den Schlackesumpf abgeführt und von dort nach der Erstarrung zum Granulat ausgeschleust. Für den in **Fig. 1** dargestellten Fall einer Gasabführung nach unten ohne Umlenkung passiert die Schlacke gemeinsam mit dem Gas zunächst die Quenchkammer 33, bevor sie in den Schlackesumpf 37 gelangt. Andernfalls, bei Umlenkung der Gasabströmung oder bei einer Gasabströmung nach oben wird die flüssige Schlacke durch die Umlenkung des Gasstroms infolge der Schwerkraft aus dem Gasstrom abgetrennt beziehungsweise direkt in den Schlackesumpf überführt.

Das aus der Reaktionskammer 30 abströmende heiße Vergasungsgas kann in der Quenchkammer 33 mit Quenchwasser, das über Zuführungen 34 eingespritzt wird, auf eine Temperatur von ca. 500 bis 1.000 °C abgekühlt werden (Teilquenchung), um anschließend z. B. einer konvektiven Kühlung zugeführt zu werden, oder es kann alternativ auf eine Temperatur von ca. 200 bis 250 °C (Vollquenchung) abgekühlt werden, um danach z. B. einer stofflichen Umwandlungsstufe zugeführt zu werden. Das abgekühlte und mit Wasserdampf angereicherte Vergasungsgas verlässt als Vergasungsrohgas, respektive Synthesegas SG den Vergasungsreaktor 32 über den Gasaustrittsstutzen 38 und kann über eine Produktleitung 35 einer nachfolgenden Prozessstufe (nicht dargestellt) zugeführt werden.

Mit dem erfindungsgemäßen Verfahren zur Flugstrom-Vergasung von Biomasse können Holz, Holzabfälle, Grünschnitt, Gras, landwirtschaftliche Produkte und Abfallstoffe, wie z. B. Stroh, Rückstände aus der Verarbeitung von Biomasse u. ä., und damit auch minderwertige Biomasse in kohlenmonoxid- und wasserstoffreiches, teerfreies und methanarmes Brenn-, Synthese- und/oder Reduktionsgas mit hohem Umwandlungswirkungsgrad umgesetzt werden.

Dies wird durch die Kombination der hydrothermalen Karbonisierung, der Trocknung der aus dieser Biomasse erzeugten Kohle, der Mahlung von Kohle, der Dichtstromförderung und der Flugstrom-Vergasung zu Brenn-, Synthese- und/oder Reduktionsgas erreicht. Dabei wird dem unter Überdruck stehenden Flugstromvergaser mittels eines pneumatischen Dichtstromfördersystems mit Kohlenstoff angereicherter Brennstaub mit einer Teilchengröße unter 500 µm, bevorzugt zwischen 55 und 500 µm, zugeführt, wobei der Flugstromvergaser einschließlich Brenner, Reaktionskammer und Kühlung auf Grund der einheitlichen Brennstoffstruktur technisch einfach gestaltet werden kann und lediglich zwei Schleusungen erforderlich macht.

Dabei können die Verfahrensschritte hydrothermale Karbonisierung, Trocknung und Mahlung räumlich und zeitlich getrennt sowohl voneinander, als auch von dem Standort Vergasung durchgeführt werden, so dass je nachdem, wo die Biomasse anfällt, die aufbereitete Biomasse abhängig von der weiteren Verarbeitung bzw. dem Verwendungszweck in die entsprechenden Vorrichtungen zur Durchführung der Verfahrensschritte überführt werden kann.

So kann zum Beispiel in einem alternativen Verfahren vorgesehen sein, die aus der Biomasse erzeugte Kohle nicht pneumatisch in den Flugstromvergaser zu fördern, sondern mit einer brennbaren Flüssigkeit wie Teeröl, Altöl, Naphtha, Biodiesel bzw. anderen brennbaren Flüssigkeiten anzumaischen und diese Brennstoffmaische in den Flugstromvergaser zu pumpen. Die Erzeugung der Maische kann dabei in der Vergasungsanlage 22 erfolgen, wobei die brennbare Flüssigkeit stromaufwärts des Vergasungsreaktors 40 zugeführt wird, und die Maische mittels eines Pumpsystems zu dem Brenner 28 gepumpt wird. Die Zuführung der brennbaren Flüssigkeit könnte dabei der in **Fig. 1** dargestellten Fördergasleitung 26 entsprechen, und das Pumpsystem dem Dichtstromfördersystem 25. Der mit der brennbaren Flüssigkeit angemaischte Brennstoff, kann dabei ein Brennstaub BS sein, unter Umständen kann als Brennstoff aber auch schon die Karbonisierungskohle KK direkt nach der hydrothermalen Karbonisierung mit anschließender Entwässerung verwendet werden, so dass hierbei die Schritte der Trocknung und Mahlung entfallen können.

Als weitere Alternative ist die Herstellung der Brennstoffmaische schon am Standort der Aufbereitungsanlage 1 denkbar, so dass nicht Brennstaub, sondern die Brennstoffmaische in die Vergasungsanlage zu transportieren ist.

## Patentansprüche

1. Vorrichtung zur Erzeugung eines Synthesegases (SG) aus Biomasse (BM) durch Flugstromvergasung, umfassend:
- eine Aufbereitungsanlage (1) für die Biomasse (BM), die eine Grobzerkleinerungsvorrichtung (2) für die zugeführte Biomasse (BM) aufweist, die stromabwärts über eine erste Schleuse (3) mit einer druckbeaufschlagten Karbonisierungsanlage (4) zur hydrothermalen Erzeugung von Karbonisierungskohle (KK) aus der Biomasse (BM) verbunden ist, wobei die Karbonisierungsanlage (4)
- zumindest eine Vorwärmvorrichtung (5) und einen stromabwärts der Vorwärmvorrichtung (5) angeordneten Karbonisierungsreaktor (6) umfasst, wobei eine Heißwasserleitung (7) von dem Karbonisierungsreaktor (6) zur Rückführung von abgespaltetem Prozesswasser (W) aus dem Karbonisierungsreaktor (6) zu der Vorwärmvorichtung (5) verläuft, und
- stromabwärts über eine zweite Schleuse (11) mit zumindest einer Fest-Flüssig-Trennvorrichtung (12,13) zur Bereitstellung eines Brennstoffs verbunden ist,
und wobei die Aufbereitungsanlage (1) stromabwärts der Fest-FlüssigTrennvorrichtung (12,13) eine Trocknungsvorrichtung (16) zur Trocknung des Brennstoffs aufweist, der eine Zerkleinerungsvorrichtung (18) nachgeschaltet ist, wobei die Zerkleinerungsvorrichtung (18) eine Zerkleinerung des Brennstoffs in einen Brennstaub (BS) mit Partikelgrößen in einem Bereich von 55 µm bis 500 µm bereitstellt,
und umfassend:
- eine Überführungsvorrichtung (21) zur Überführung des Brennstoffs und
- eine Flugstrom-Vergasungsanlage (22),
wobei die Überführungsvorrichtung (21) eine Kopplung der Aufbereitungsanlage (1) mit der Flugstrom-Vergasungsanlage (22) bereitstellt,
wobei die Flugstrom-Vergasungsanlage (22) eine Brennstoffzuführung umfasst, die mit der Überführungsvorrichtung (21) koppelbar ist, und die stromabwärts über eine dritte Schleuse (24) mit einem Fördersystem für den Brennstoff verbunden ist, das in eine Flugstromvergasungsvorrichtung (40) mündet.

2. Vorrichtung nach Anspruch 1, **dadurch gekennzeichnet, dass** die Biomasse (BM) Holz, Holzabfälle, Grünschnitt, Gras, landwirtschaftliche Produkte und Abfallstoffe, umfassend Stroh sowie Rückstände aus einer Biomasseverarbeitung umfasst.

3. Vorrichtung nach Anspruch 1 oder 2, **dadurch gekennzeichnet, dass** die Zerkleinerungsvorrichtung (18) mit einer Zuführleitung (19) für Hilfsmittel, insbesondere für Mahl- und/oder Fließhilfsmittel verbunden ist.

4. Vorrichtung nach Anspruch 1, **dadurch gekennzeichnet, dass** die Flugstromvergasungsvorrichtung (40) zumindest einen Brenner (28) aufweist, in den eine Zuführungsleitung (27) für ein Vergasungsmittel mündet und der mit einem Flugstromvergasungsreaktor (32) verbunden ist, der eine mit einer Feuerfestauskleidung und/oder einer Kühlvorrichtung (31) ausgestattete Reaktionskammer (30) und stromabwärts der Reaktionskammer (30) eine Kühlkammer umfasst, von der sich eine Ausschleusleitung (36) für Schlacke und eine Produktleitung (35) für das Synthesegas (SG) weg erstrecken.

5. Vorrichtung nach Anspruch 4, **dadurch gekennzeichnet, dass** die Kühlkammer
- eine Quenchkammer (33) mit einer Mehrzahl von Zuführungen (34) für Quenchwasser und/oder Quenchgas ist,
- eine Vorrichtung zur indirekten Gaskühlung mittels eines Strahlungs- und/oder Konvektionskühlers umfasst oder
- eine Kombination aus Quenchkammer (33) und Vorrichtung zur indirekten Gaskühlung umfasst.

6. Vorrichtung nach Anspruch 4 oder 5, **dadurch gekennzeichnet, dass** der Flugstromvergasungsreaktor (32) stromabwärts der Reaktionskammer (30) einen Schlackesumpf (37) umfasst, von dem sich die Ausschleusleitung (36) über eine vierte Schleuse (39) erstreckt.

7. Vorrichtung nach zumindest einem der Ansprüche 1, 4 bis 6, **dadurch gekennzeichnet, dass** das Fördersystem
- ein pneumatisches Dichtstromfördersystem (25) ist, das zumindest eine Fördergasleitung (26) umfasst, wenn der Brennstoff der Brennstaub (BS) ist, oder
- ein Pumpenfördersystem ist, wenn der Brennstoff in Form einer hydraulisch förderbaren Brennstoffmaische bereitgestellt ist, die den Brennstoff und eine brennbare Flüssigkeit umfasst, wobei die Brennstoffmaische in einer Maischvorrichtung bereitgestellt wird, die stromaufwärts des Pumpenfördersystem in der Flugstrom-Vergasungsanlage (22) oder der Aufbereitungsanlage (1) angeordnet ist und die eine Zuführvorrichtung für die brennbare Flüssigkeit umfasst.

8. Verfahren zur Erzeugung eines Synthesegases (SG) aus Biomasse (BM) durch Flugstromvergasung unter Verwendung einer Vorrichtung nach zumindest einem der Ansprüche 1 bis 8, **umfassend die Schritte:**
A) Erzeugen des zur Vergasung in der Flugstrom-Vergasungsanlage (22) geeigneten Brennstoffs aus der Biomasse (BM) mittels der Aufbereitungsanlage (1) durch
- Grobzerkleinern der Biomasse (BM) in der Grobzerkleinerungsvorrichtung (2),
- Zuführen der grob zerkleinerten Biomasse (BM) über die erste Schleuse (3) in die druckbeaufschlagte Karbonisierungsanlage (4),
- Vorwärmen der grob zerkleinerten Biomasse (BM) in der Vorwärmvorrichtung (5),
- hydrothermales Karbonisieren der vorgewärmten Biomasse (BM) in dem Karbonisierungsreaktor (6) zu einem Gemisch aus Karbonisierungskohle (KK) und Wasser (W),
- Rückführen von Wasser (W) aus dem Gemisch mittels der Heißwasserleitung (7) von dem Karbonisierungsreaktor (6) in die Vorwärmvorrichtung (5) zum Vorwärmen der Biomasse (BM),
- Überführen der Karbonisierungskohle (KK) und des Wassers (W) durch die zweite Schleuse (11) in die zumindest eine Fest-FlüssigTrennvorrichtung (12,13) und Abtrennen der Karbonisierungskohle (KK) von dem Wasser (W),
- Überführen der Karbonisierungskohle (KK) in eine Trocknungsvorrichtung (16) und Trocknen der Karbonisierungskohle (KK) zu Trockenkohle (TK),
- Überführen der Trockenkohle (TK) in die Zerkleinerungsvorrichtung (18) und Zerkleinern der Trockenkohle (TK) zu Brennstaub (BS) mit Partikelgrößen in einem Bereich von 55 µm bis 500 µm,
wobei der Brennstoff bereitgestellt wird,
B) Überführen des Brennstoffs mittels der Überführungsvorrichtung (21) von der Aufbereitungsanlage (1) zu der mit der Überführungsvorrichtung (21) koppelbaren Brennstoffzuführung der Flugstrom-Vergasungsanlage (22), die stromabwärts über eine dritte Schleuse (24) mit einem Fördersystem für den Brennstoff verbunden ist, das in eine Flugstromvergasungsvorrichtung (40) mündet,
und
C) Erzeugen des Synthesegases (SG) durch Flugstromvergasen des Brennstoffs in dem Flugstrom-Vergasungsreaktor (32).

9. Verfahren nach Anspruch 8, **umfassend den Schritt** vor dem Flugstromvergasen:
- Anmaischen des Brennstoffs in der Maischvorrichtung durch Zuführen einer brennbare Flüssigkeit und Erhalten einer hydraulisch förderbaren Brennstoffmaische.

10. Verfahren nach Anspruch 8 oder 9, **wobei** die Schritte des hydrothermalen Karbonisierens, des Trocknens und des Zerkleinerns zeitlich und räumlich unabhängig voneinander durchgeführt werden.

11. Verfahren nach zumindest einem der Ansprüche 8 bis 10, **umfassend den Schritt** des Zuführens eines Mahl- und/oder Fließ-Hilfsmittels in die Zerkleinerungsvorrichtung (18).

12. Verfahren nach zumindest einem der Ansprüche 8 bis 11, **wobei** die Flugstromvergasung bei einem Druck von wenigstans 3 bar, vorzugsweise über 40 bar, und bei Temperaturen von 1.200°C bis 1.600°C, insbesondere bei 1400°C bis 1500°C exotherm unter Sauerstoffbeteiligung abläuft.

## Claims

1. Apparatus for generating a synthesis gas (SG) from biomass (BM) by entrained-flow gasification, comprising:
- a conditioning plant (1) for the biomass (BM), which has a coarse crushing device (2) for the biomass (BM) supplied and which is connected downstream via a first lock (3) to a pressurized carbonization plant (4) for the hydrothermal generation of carbonization char (KK) from the biomass (BM), where the carbonization plant (4)
- comprises at least a preheating device (5) and a carbonization reactor (6) disposed downstream of the preheating device (5), where a hot water line (7) runs from the carbonization reactor (6) to the preheating device (5) for the purpose of recycling eliminated process water (W) from the carbonization reactor (6), and
- is connected downstream via a second lock (11) to at least one solid-liquid separation device (12, 13) for providing a fuel,
and where the conditioning plant (1), downstream of the solid-liquid separation device (12, 13), has a drying device (16) for drying the fuel, downstream of which there is a crushing device (18), the crushing device (18) providing for crushing of the fuel to give a pulverized fuel (BS) having particle sizes in a range from 55 µm to 500 µm,
and comprising:
- a transfer device (21) for transferring the fuel, and
- an entrained-flow gasification plant (22),
where the transfer device (21) provides for coupling of the conditioning plant (1) to the entrained-flow gasification plant (22),
where the entrained-flow gasification plant (22) comprises a fuel supply line which is couplable to the transfer device (21) and which is connected downstream via a third lock (24) to a conveying system for the fuel that leads into an entrained-flow gasification device (40) .

2. Apparatus according to Claim 1, **characterized in that** the biomass (BM) comprises wood, wood waste, green waste, grass, agricultural products and wastes comprising straw and also residues from biomass processing.

3. Apparatus according to Claim 1 or 2, **characterized in that** the crushing device (18) is connected to a supply line (19) for auxiliaries, more particularly for grinding auxiliaries and/or flow auxiliaries.

4. Apparatus according to Claim 1, **characterized in that** the entrained-flow gasification device (40) has at least one burner (28) into which there leads a supply line (27) for a gasification medium and which is connected to an entrained-flow gasification reactor (32) which comprises a reaction chamber (30), equipped with a refractory lining and/or with a cooling device (31), and which, downstream of the reaction chamber (30), comprises a cooling chamber from which there extend away an outward transfer line (36) for slag and a product line (35) for the synthesis gas (SG).

5. Apparatus according to Claim 4, **characterized in that** the cooling chamber
- is a quenching chamber (33) having a plurality of supply lines (34) for quenching water and/or quenching gas,
- comprises a device for indirect gas cooling by means of a radiant and/or convective cooler, or
- comprises a combination of quenching chamber (33) and device for indirect gas cooling.

6. Apparatus according to Claim 4 or 5, **characterized in that** the entrained-flow gasification reactor (32), downstream of the reaction chamber (30), comprises a slag sump (37) from which the outward transfer line (36) extends via a fourth lock (39).

7. Apparatus according to at least one of Claims 1 and 4 to 6, **characterized in that** the conveying system
- is a pneumatic dense-phase conveying system (25) which comprises at least a conveying gas line (26) when the fuel is the pulverized fuel (BS), or
- is a pump conveying system when the fuel is provided in the form of a hydraulically conveyable fuel slurry comprising the fuel and a combustible liquid, the fuel slurry being provided in a slurrying device which is disposed upstream of the pump conveying system in the entrained-flow gasification plant (22) or in the conditioning plant (1) and which comprises a supply device for the combustible liquid.

8. Method for generating a synthesis gas (SG) from biomass (BM) by entrained-flow gasification using an apparatus according to at least one of Claims 1 to 8, **comprising the steps of:**
A) generating the fuel suitable for gasification in the entrained-flow gasification plant (22) from the biomass (BM) by means of the conditioning plant (1), by
- coarsely crushing the biomass (BM) in the coarse crushing device (2),
- supplying the coarsely crushed biomass (BM) via the first lock (3) into the pressurized carbonization plant (4),
- preheating the coarsely crushed biomass (BM) in the preheating device (5),
- hydrothermally carbonizing the preheated biomass (BM) in the carbonization reactor (6) to give a mixture of carbonization char (KK) and water (W),
- recycling water (W) from the mixture by means of the hot water line (7) from the carbonization reactor (6) into the preheating device (5) for preheating the biomass (BM),
- transferring the carbonization char (KK) and the water (W) through the second lock (11) into the at least one solid-liquid separation device (12, 13) and removing the carbonization char (KK) from the water (W),
- transferring the carbonization char (KK) into a drying device (16) and drying the carbonization char (KK) to give dry char (TK),
- transferring the dry char (TK) into the crushing device (18) and crushing the dry char (TK) to give pulverized fuel (BS) having particle sizes in a range from 55 µm to 500 µm,
where the fuel is provided,
B) transferring the fuel by means of the transfer device (21) from the conditioning plant (1) to the fuel supply line, couplable to the transfer device (21), of the entrained-flow gasification plant (22), which is connected downstream via a third lock (24) to a conveying system for the fuel that leads into an entrained-flow gasification device (40),
and
C) generating the synthesis gas (SG) by entrained-flow gasification of the fuel in the entrained-flow gasification reactor (32).

9. Method according to Claim 8, **comprising the step,** before the entrained-flow gasification, **of:**
- slurrying the fuel in the slurrying device by supplying a combustible liquid and obtaining a hydraulically conveyable fuel slurry.

10. Method according to Claim 8 or 9, **wherein** the steps of hydrothermal carbonization, of drying and of crushing are carried out temporally and spatially independently of one another.

11. Method according to at least one of Claims 8 to 10, **comprising the step of** supplying a grinding auxiliary and/or flow auxiliary into the crushing device (18).

12. Method according to at least one of Claims 8 to 11, **wherein** the entrained-flow gasification proceeds exothermically, with participation of oxygen, at a pressure of at least 3 bar, preferably more than 40 bar, and at temperatures of 1200°C to 1600°C, more particularly at 1400°C to 1500°C.

## Revendications

1. Dispositif pour la génération d'un gaz de synthèse (SG) à partir d'une biomasse (BM) par gazéification en flux entraîné, comprenant :
- une unité de conditionnement (1) pour la biomasse (BM), qui comprend un dispositif de broyage grossier (2) pour la biomasse introduite (BM), qui est raccordé en aval par le biais d'un premier sas (3) avec une unité de carbonisation sous pression (4) pour la génération hydrothermale de charbon de carbonisation (KK) à partir de la biomasse (BM), l'unité de carbonisation (4)
- comprenant au moins un dispositif de préchauffage (5) et un réacteur de carbonisation (6) agencé en aval du dispositif de préchauffage (5), une conduite d'eau chaude (7) partant du réacteur de carbonisation (6) pour le recyclage de l'eau de procédé séparée (W) depuis le réacteur de carbonisation (6) dans le dispositif de préchauffage (5), et
- étant raccordée en aval par le biais d'un deuxième sas (11) avec au moins un dispositif de séparation solide-liquide (12, 13) pour la préparation d'un combustible,
et l'unité de conditionnement (1) comprenant en aval du dispositif de séparation solide-liquide (12, 13) un dispositif de séchage (16) pour le séchage du combustible, en aval duquel un dispositif de broyage (18) est raccordé, le dispositif de broyage (18) réalisant un broyage du combustible en une poussière de combustible (BS) ayant des tailles de particules dans une plage allant de 55 µm à 500 µm,
et comprenant :
- un dispositif de transfert (21) pour le transfert du combustible, et
- une unité de gazéification en flux entraîné (22), le dispositif de transfert (21) réalisant un couplage de l'unité de conditionnement (1) avec l'unité de gazéification en flux entraîné (22),
l'unité de gazéification en flux entraîné (22) comprenant une alimentation de combustible, qui peut être couplée avec le dispositif de transfert (21), et qui est raccordée en aval par le biais d'un troisième sas (24) avec un système de transport pour le combustible, qui débouche dans un dispositif de gazéification en flux entraîné (40).

2. Dispositif selon la revendication 1, **caractérisé en ce que** la biomasse (BM) comprend du bois, des déchets de bois, des produits de taille en vert, de l'herbe, des produits et déchets agricoles, comprenant de la paille et des résidus d'un usinage de biomasse.

3. Dispositif selon la revendication 1 ou 2, **caractérisé en ce que** le dispositif de broyage (18) est raccordé avec une conduite d'alimentation (19) pour des adjuvants, notamment pour des adjuvants de broyage et/ou d'écoulement.

4. Dispositif selon la revendication 1, **caractérisé en ce que** le dispositif de gazéification en flux entraîné (40) comprend au moins un brûleur (28), dans lequel une conduite d'alimentation (27) pour un agent de gazéification débouche et qui est raccordé avec un réacteur de gazéification en flux entraîné (32), qui comprend une chambre de réaction (30) équipée d'un habillage réfractaire et/ou d'un dispositif de refroidissement (31) et, en aval de la chambre de réaction (30), une chambre de refroidissement, de laquelle partent une conduite de déchargement (36) pour des scories et une conduite de produit (35) pour le gaz de synthèse (SG).

5. Dispositif selon la revendication 4, **caractérisé en ce que** la chambre de refroidissement
- est une chambre de trempe (33) comprenant une pluralité d'alimentations (34) pour de l'eau de trempe et/ou un gaz de trempe,
- comprend un dispositif pour le refroidissement indirect par un gaz au moyen d'un refroidisseur à rayonnement et/ou à convection, ou
- comprend une combinaison d'une chambre de trempe (33) et d'un dispositif pour le refroidissement indirect par un gaz.

6. Dispositif selon la revendication 4 ou 5, **caractérisé en ce que** le réacteur de gazéification en flux entraîné (32) comprend en aval de la chambre de réaction (30) un fond de scories (37), duquel la conduite de déchargement (36) part par le biais d'un quatrième sas (39) .

7. Dispositif selon au moins l'une quelconque des revendications 1, 4 à 6, **caractérisé en ce que** le système de transport
- est un système de transport à courant dense pneumatique (25), qui comprend au moins une conduite de gaz de transport (26), lorsque le combustible est la poussière de combustible (BS),
ou
- est un système de transport à pompe, lorsque le combustible est préparé sous la forme d'une suspension de combustible pouvant être transportée par voie hydraulique, qui comprend le combustible et un liquide combustible, la suspension de combustible étant préparée dans un dispositif de suspension, qui est agencé en amont du système de transport à pompe dans l'unité de gazéification en flux entraîné (22) ou l'unité de conditionnement (1), et qui comprend un dispositif d'alimentation pour le liquide combustible.

8. Procédé de formation d'un gaz de synthèse (SG) à partir d'une biomasse (BM) par gazéification en flux entraîné utilisant un dispositif selon au moins l'une quelconque des revendications 1 à 8, comprenant les étapes suivantes :
A) la génération du combustible approprié pour la gazéification dans l'unité de gazéification en flux entraîné (22) à partir de la biomasse (BM) au moyen de l'unité de conditionnement (1) par
- le broyage grossier de la biomasse (BM) dans le dispositif de broyage grossier (2),
- l'introduction de la biomasse broyée grossièrement (BM) par le biais du premier sas (3) dans l'unité de carbonisation sous pression (4),
- le préchauffage de la biomasse broyée grossièrement (BM) dans le dispositif de préchauffage (5),
- la carbonisation hydrothermale de la biomasse préchauffée (BM) dans le réacteur de carbonisation (6) pour former un mélange de charbon de carbonisation (KK) et d'eau (W),
- le rec yclage de l'eau (W) du mélange au moyen de la conduite d'eau chaude (7) depuis le réacteur de carbonisation (6) dans le dispositif de préchauffage (5) pour le préchauffage de la biomasse (BM),
- le transfert du charbon de carbonisation (KK) et de l'eau (W) au travers du deuxième sas (11) dans ledit au moins un dispositif de séparation solide-liquide (12, 13) et la séparation du charbon de carbonisation (KK) de l'eau (W),
- le transfert du charbon de carbonisation (KK) dans un dispositif de séchage (16) et le séchage du charbon carbonisé (KK) en charbon sec (TK),
- le transfert du charbon sec (TK) dans le dispositif de broyage (18) et le broyage du charbon sec (TK) en poussière de combustible (BS) ayant des tailles de particules dans une plage allant de 55 µm à 500 µm,
le combustible étant ainsi préparé,
B) le transfert du combustible au moyen du dispositif de transfert (21) depuis l'unité de conditionnement (1) dans l'alimentation de combustible pouvant être couplée avec le dispositif de transfert (21) de l'unité de gazéification en flux entraîné (22), qui est raccordée en aval par le biais d'un troisième sas (24) avec un système de transport pour le combustible, qui débouche dans un dispositif de gazéification en flux entraîné (40),
et
C) la génération du gaz de synthèse (SG) par gazéification en flux entraîné du combustible dans le réacteur de gazéification en flux entraîné (32).

9. Procédé selon la revendication 8, comprenant l'étape suivante avant la gazéification en flux entraîné :
- la suspension du combustible dans le dispositif de suspension par introduction d'un liquide combustible et l'obtention d'une suspension de combustible pouvant être transportée par voie hydraulique.

10. Procédé selon la revendication 8 ou 9, dans lequel les étapes de carbonisation hydrothermale, de séchage et de broyage sont réalisées indépendamment les unes des autres dans le temps et dans l'espace.

11. Procédé selon au moins l'une quelconque des revendications 8 à 10, comprenant l'étape d'introduction d'un adjuvant de broyage et/ou d'écoulement dans le dispositif de broyage (18).

12. Procédé selon au moins l'une quelconque des revendications 8 à 11, dans lequel la gazéification en flux entraîné se déroule à une pression d'au moins 3 bar, de préférence supérieure à 40 bar, et à des températures de 1 200 °C à 1 600 °C, notamment de 1 400 °C à 1 500 °C, de manière exothermique avec participation d'oxygène.
